# EUROPEAN PATENT APPLICATION

(11) **EP 4 156 460 A1**
(43) Date of publication of application: **29.03.2023**
(21) Application number: 21808752.6
(22) Date of filing: 17.05.2021
(51) Int. Cl.: H02K 1/14, H02K 21/22

(54) **ROTARY ELECTRIC MACHINE**

(30) Priority: 21.05.2020 JP 2020089014
(71) Applicant: Daikin Industries, Ltd., Osaka-shi, Osaka 530-0001 (JP)
(72) Inventor: ASARI, Tsukasa, Osaka-shi, Osaka 530-8323 (JP); ASANO, Yoshinari, Osaka-shi, Osaka 530-8323 (JP); KIDO, Naohiro, Osaka-shi, Osaka 530-8323 (JP); HIBINO, Hiroshi, Osaka-shi, Osaka 530-8323 (JP); UEDA, Akane, Osaka-shi, Osaka 530-8323 (JP)
(74) Representative: Goddar, Heinz J.
(86) International application number: PCT/JP2021/018541
(87) International publication number: WO 2021/235376

(57) **Abstract**

A rotary electrical device includes a rotor having a substantially hollow cylindrical shape or a substantially solid cylindrical shape and configured to be rotatable; and a stator having a substantially annular shape and disposed in a radial direction of the rotor to surround a rotation axis of the rotor. The stator includes a plurality of stator units that are stacked in an axial direction of the rotor. Each of the stator units includes a winding that is wound in a substantially annular shape around the rotation axis, a stator core that surrounds the winding, and one or more claw magnetic poles that protrude radially toward the rotor from each of two end portions in an axial direction of the stator core. The rotor includes a magnet that radially faces at least a portion of any of claw magnetic poles of the stator at a predetermined rotation position. At least one of magnet end portions in an axial direction of the magnet protrudes further in the axial direction than all of the claw magnetic poles of the stator.

## Description

### TECHNICAL FIELD

The present disclosure relates to a rotary electrical device.

### BACKGROUND ART

A motor that includes a stator and a rotor is known. In the stator, an A-phase stator unit having a plurality of claw magnetic poles arranged at equal angular intervals and a B-phase stator unit having a plurality of claw magnetic poles arranged at equal angular intervals are arranged in the axial direction, and the rotor includes permanent magnets that face the claw magnetic poles of the A-phase and the B-phase stator units (see Patent Document 1, for example).

### [RELATED-ART DOCUMENTS]

### [PATENT DOCUMENTS]

Patent Document 1: Japanese Laid-open Patent Publication No. 2017-147811

### SUMMARY OF THE INVENTION

### PROBLEM TO BE SOLVED BY THE INVENTION

For a rotary electrical device in which a plurality of stator units are stacked in the axial direction of a rotor, the torque of the rotary electrical device may be reduced.

The present disclosure provides a rotary electrical device that can suppress a decrease in torque.

### MEANS TO SOLVE THE PROBLEM

An aspect of the present disclosure provides a rotary electrical device that includes a rotor having a substantially hollow cylindrical shape or a substantially solid cylindrical shape and configured to be rotatable; and a stator having a substantially annular shape and disposed in a radial direction of the rotor to surround a rotation axis of the rotor. The stator includes a plurality of stator units that are stacked in an axial direction of the rotor. Each of the stator units includes a winding that is wound in a substantially annular shape around the rotation axis, a stator core that surrounds the winding, and one or more claw magnetic poles that protrude radially toward the rotor from each of two end portions in an axial direction of the stator core. One or more claw magnetic poles that protrude from one end portion of the two end portions of the stator core and one or more claw magnetic poles that protrude from an opposite end portion of the two end portions of the stator core are alternately arranged in a circumferential direction of the stator. The rotor includes a magnet that radially faces at least a portion of any of claw magnetic poles of the stator at a predetermined rotation position. At least one of magnet end portions in an axial direction of the magnet protrudes further in the axial direction than all of the claw magnetic poles of the stator.

With this configuration, a decrease in torque can be suppressed.

In the above-described rotary electrical device, the magnet end portions on both sides in the axial direction of the magnet may protrude further in the axial direction than all of the claw magnetic poles of the stator.

With this configuration, a decrease in torque can be further suppressed.

In the above-described rotary electrical device, one of the magnet end portions may protrude further in the axial direction than claw magnetic poles of an outer stator unit of the plurality of stator units so as to reduce a difference in flux linkage between a winding of the outer stator unit and a winding of an inner stator unit of the plurality of stator units, the outer stator unit being located outward in the axial direction and the inner stator unit being located inward in the axial direction.

With this configuration, an imbalance in torque between the outer stator unit and the inner stator unit can be reduced.

In the above-described rotary electrical device, adjacent stator units of the plurality of stator units may be arranged with a gap therebetween, and a portion of the magnet may radially face the gap.

With this configuration, a decrease in torque can be further suppressed.

The above-described rotary electrical device may further comprise a member that is made of a non-magnetic material in the gap.

With this configuration, the member that is made of a non-magnetic material can reduce magnetic flux leakage between adjacent stator units, and thus, a decrease in torque can be further suppressed.

In the above-described rotary electrical device, the magnet may include one magnet member.

With this configuration, the number of magnet members of the magnet can be decreased, and thus, ease of assembly of the magnet into a rotor core can be facilitated.

In the above-described rotary electrical device, the magnet may include a plurality of magnet members that are arranged in the axial direction, and a portion between adjacent magnet members of the plurality of magnet members may radially face a gap between adjacent stator units of the plurality of stator units.

With this configuration, a decrease in torque can be further suppressed.

### BRIEF DESCRIPTION OF THE DRAWINGS

Fig. 1 is a perspective view of an example of a rotary electrical device according to a first embodiment;
Fig. 2 is a perspective view of an example of a stator according to the first embodiment;
Fig. 3 is a perspective view of an example of a stator unit according to the first embodiment;
Fig. 4 is an exploded perspective view of an example of the stator unit according to the first embodiment;
Fig. 5 is a diagram illustrating an example of a state in which a magnetic flux linked with each of windings of a plurality of stator units stacked in the axial direction of a rotor is unbalanced;
Fig. 6 is a cross-sectional view partially illustrating a first example configuration of the rotary electrical device according to the first embodiment;
Fig. 7 is a cross-sectional view partially illustrating a second example configuration of the rotary electrical device according to the first embodiment;
Fig. 8 is a cross-sectional view partially illustrating a third example configuration of the rotary electrical device according to the first embodiment;
Fig. 9 is a cross-sectional view partially illustrating a fourth example configuration of the rotary electrical device according to the first embodiment;
Fig. 10 is a cross-sectional view partially illustrating a fifth example configuration of the rotary electrical device according to the first embodiment;
Fig. 11 is a cross-sectional view partially illustrating a sixth example configuration of the rotary electrical device according to the first embodiment; and
Fig. 12 is a cross-sectional view partially illustrating a seventh example configuration of the rotary electrical device according to the first embodiment.

### MODE FOR CARRYING OUT THE INVENTION

In the following, embodiments will be described.

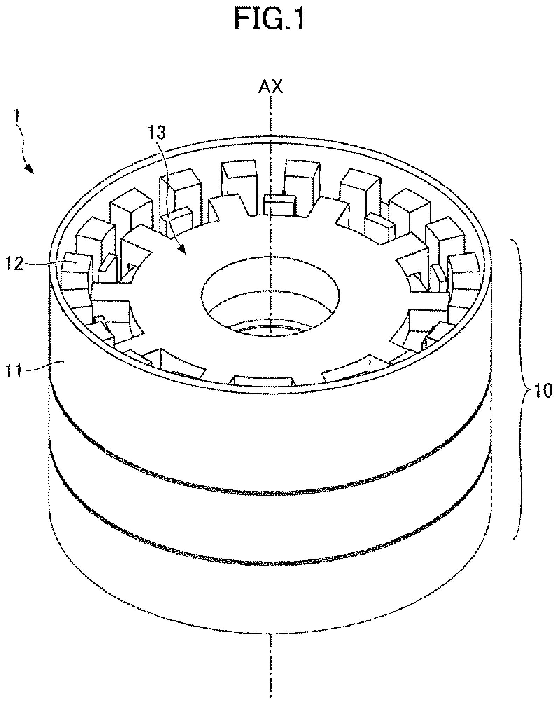

Fig. 1 is a perspective view of an example of a rotary electrical device according to a first embodiment. A motor 1 illustrated in Fig. 1 is an example of the rotary electrical device. The motor 1 is an outer-rotor-type claw pole motor in which a rotor 10 is disposed radially outward relative to a stator 13. For example, the motor 1 is mounted on a compressor, a fan, or the like of an air conditioner.

The motor 1 includes the rotor 10 and the stator 13. The rotor 10 has a substantially hollow cylindrical shape and is configured to be rotatable. The stator 13 has a substantially annular shape and is disposed radially inward relative to the rotor 10 to surround a rotation axis AX of the rotor 10. The rotor 10 is longer than the stator 13 in an axial direction of the motor 1 (hereinafter also simply referred to as an "axial direction").

The rotor 10 is disposed outward in a radial direction of the motor 1 (hereinafter also simply referred to as a "radial direction") with respect to the stator 13. The rotor 10 is configured to be rotatable about the rotation axis AX. The rotor 10 includes a rotor core 11 and a plurality of (in this example, 20) permanent magnets 12.

The rotor core 11 has, for example, a substantially cylindrical shape and is disposed such that the rotation axis AX of the motor 1 substantially coincides with the axis of the cylindrical shape. The rotor core 11 is longer than the stator 13 in the axial direction, and is formed of a magnetic material (such as a steel plate, cast iron, or a magnetic powder core). The rotor core 11 may be comprised of one member in the axial direction, or may be comprised of a plurality of members that are stacked in the axial direction (for example, the number of members may correspond to the number of stator units as will be described later).

The plurality of (in this example, 20) permanent magnets 12 are arranged on the inner circumferential surface of the rotor core 11 at equal intervals in the circumferential direction. The permanent magnets 12 are arranged so as to be substantially present between one end and the other end of the rotor core 11. The permanent magnets 12 are, for example, neodymium sintered magnets or ferrite magnets.

Both ends of each of the permanent magnets 12 in the radial direction are magnetized to different magnetic poles. From among the plurality of permanent magnets 12, the inner sides, facing the stator 13 in the radial direction, of two permanent magnets 12 that are adjacent to each other in the circumferential direction are magnetized to different magnetic poles. With this configuration, on the outer side of the stator 13 in the radial direction, permanent magnets 12 whose inner sides in the radial direction are magnetized to N-poles and permanent magnets 12 whose inner sides in the radial direction are magnetized to S-poles are alternately arranged in the circumferential direction.

Each of the permanent magnets 12 may be comprised of one magnet member in the axial direction. Alternatively, each of the permanent magnets 12 may be comprised of a plurality of magnet members that are arranged in the axial direction (for example, the number of magnet members may correspond to the number of stator units as will be described later). In this case, the inner sides, facing the stator 13 in the radial direction, of a plurality of magnet members, which constitute a corresponding permanent magnet 12 and are arranged in the axial direction, are all magnetized to the same magnetic pole.

Note that the plurality of permanent magnets 12 arranged in the circumferential direction may be replaced with a permanent magnet that is comprised of one member and that is magnetized to have alternately different magnetic poles in the circumferential direction, such as an annular ring magnet, or a plastic magnet. In this case, the permanent magnet comprised of one member in the circumferential direction may also be comprised of one member in the axial direction, such that the permanent magnet may be entirely comprised of one member. In addition, the permanent magnet comprised of one member in the circumferential direction may be separated into a plurality of members in the axial direction, as in the case of the plurality of permanent magnets 12. Further, when a plastic magnet comprised of one member in the circumferential direction is employed, the rotor core 11 may be omitted. Regardless of whether a permanent magnet is comprised of a plurality of members or one member, the permanent magnet is magnetized such that a predetermined number of magnetic poles is arranged in the circumferential direction.

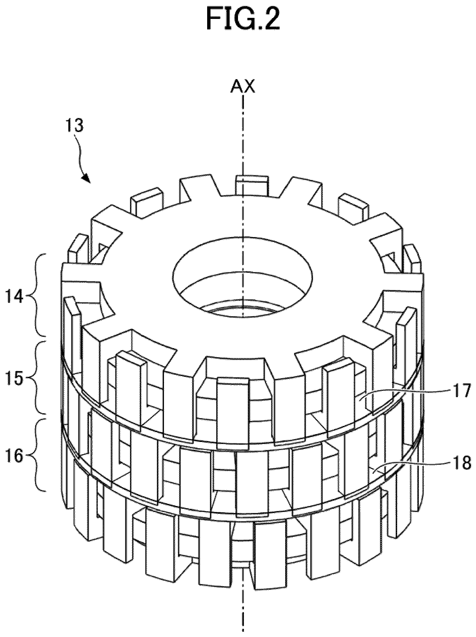

Fig. 2 is a perspective view of an example of a stator according to the first embodiment. Specifically, Fig. 2 is a diagram illustrating the motor from which the rotor 10 of Fig. 1 is removed. The stator 13 illustrated in Fig. 2 is disposed radially inward relative to the rotor 10 (the rotor core 11 and the permanent magnets 12). The stator 13 is a member having a substantially annular shape and is disposed to surround the rotation axis AX of the rotor 10. In this example, the stator 13 includes a plurality of (in this example, three) stator units 14 to 16 that are stacked in the axial direction, and a plurality of (in this example, two) non-magnetic material layers 17 and 18.

The stator 13 includes the stator units 14 to 16 of multiple phases (three phases in this example) having substantially the same structure. Specifically, the stator 13 includes the U-phase stator unit 14, the V-phase stator unit 15, and the W-phase stator unit 16. The plurality of stator units 14 to 16 are offset by an electric angle of 120° in the circumferential direction.

Note that the motor 1 (stator 13) does not necessarily have three phases, and may have two phases or four or more phases.

The stator 13 includes the non-magnetic material layer 17 between the stator units 14 and 15 that are adjacent to each other in the axial direction, and includes the non-magnetic material layer 18 between the stator units 15 and 16 that are adjacent to each other in the axial direction. The non-magnetic material layer 17 can reduce magnetic flux leakage between the adjacent stator units 14 and 15 of the two different phases. The non-magnetic material layer 18 can reduce magnetic flux leakage between the adjacent stator units 15 and 16 of the two different phases. Each of the non-magnetic material layers 17 and 18 functions as a spacer between adjacent phases.

The non-magnetic material layer 17 is a U-V interphase member provided between the stator unit 14 of the U-phase and the stator unit 15 of the V-phase, which are adjacent to each other in the axial direction. The non-magnetic material layer 17 has, for example, a substantially disk shape or a substantially cylindrical shape having a predetermined thickness in the axial direction, and a through-hole through which an inserting member (not illustrated) is inserted is formed in the central portion of the non-magnetic material layer 17. The same may apply to the non-magnetic material layer 18. The non-magnetic material layer 18 is a V-W interphase member provided between the stator unit 15 of the V-phase and the stator unit 16 of the W-phase, which are adjacent to each other in the axial direction.

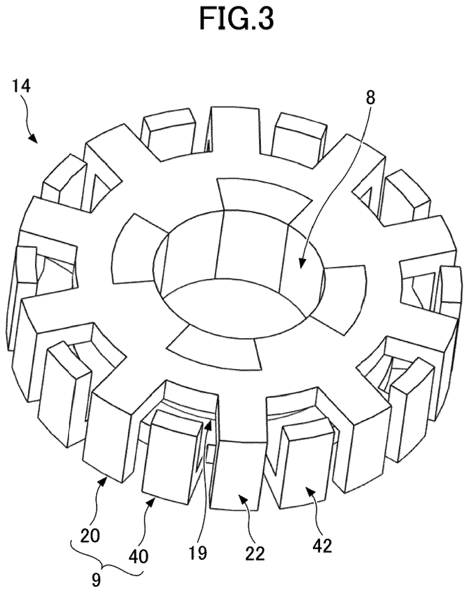

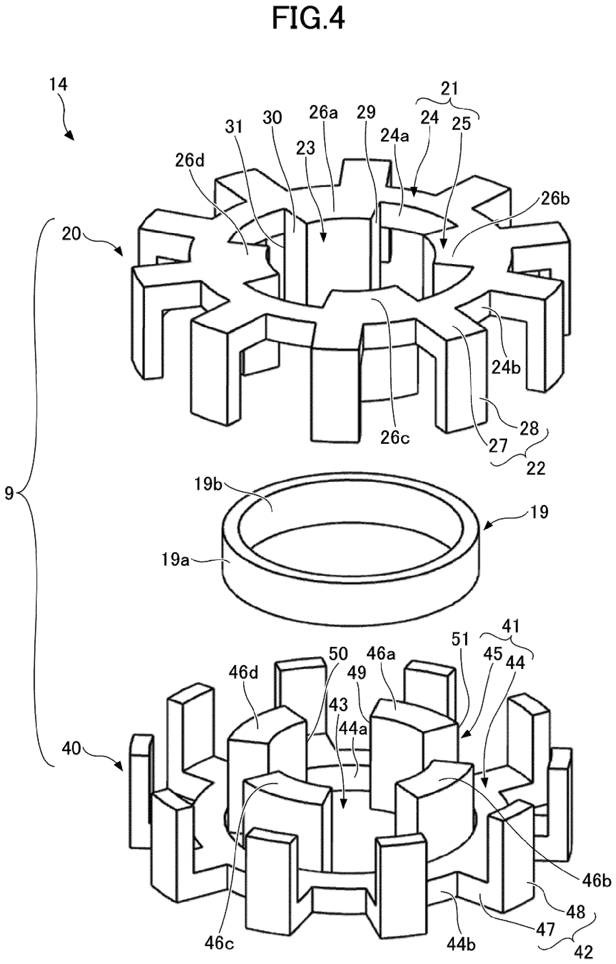

Fig. 3 is a perspective view of an example of a stator unit according to the first embodiment. Fig. 4 is an exploded perspective view of an example of the stator unit according to the first embodiment. The above-described stator units 15 and 16 have substantially the same configuration as the stator unit 14 illustrated in Fig. 3 and Fig. 4, and thus, the description of the stator units 15 and 16 will be omitted by referring to the description of the stator unit 14.

The stator unit 14 includes a winding 19 that is wound in a substantially annular shape around the rotation axis AX, a stator core 9 that is provided so as to surround the winding 19, and a through-hole 8 (see Fig. 3) through which an inserting member (not illustrated) is inserted. The stator core 9 is, for example, constituted by a magnetic powder core. The stator core 9 constituted by a magnetic powder core can reduce iron loss at high frequencies. The stator core 9 includes a plurality of cores 20 and 40 facing each other with the winding 19 interposed therebetween in the axial direction of the stator 13.

The plurality of cores 20 and 40 are provided so as to surround the winding 19. The plurality of cores 20 and 40 have the same shape.

As illustrated in Fig. 4, the core 20 includes a yoke 21, a plurality of claw magnetic poles 22, and a center hole 23. The core 40 includes a yoke 41, a plurality of claw magnetic poles 42, and a center hole 43.

Each of the yokes 21 and 41 has an annular shape when viewed in the axial direction, and has a predetermined thickness in the axial direction. The yoke 21 is in contact with or in proximity to the other core 40 that is different from its core 20 among the plurality of cores 20 and 40. The yoke 21 includes a first yoke portion 24 having a substantially annular shape and a second yoke portion 25 that contacts the other core 40. The yoke 41 is in contact with or in proximity to the other core 20 that is different from its core 40 among the plurality of cores 20 and 40. The yoke 41 includes a first yoke portion 44 having a substantially annular shape and a second yoke portion 45 that contacts the other core 20.

The first yoke portion 24 is an example of one end portion of two end portions in the axial direction of the stator core 9. The first yoke portion 44 is an example of the opposite end portion of the two end portions in the axial direction of the stator core 9.

The second yoke portion 25 protrudes from an inner circumferential surface 24a of the first yoke portion 24 toward the other core 40 by a predetermined amount. In this example, the second yoke portion 25 is a portion that includes a plurality of internal teeth 26 (26a, 26b, 26c, and 26d) arranged at intervals in the circumferential direction. The second yoke portion 45 protrudes from an inner circumferential surface 44a of the first yoke portion 44 toward the other core 20 by a predetermined amount. In this example, the second yoke portion 45 is a portion that includes a plurality of internal teeth 46 (46a, 46b, 46c, and 46d) arranged at intervals in the circumferential direction.

The plurality of claw magnetic poles 22 are arranged at equal intervals in the circumferential direction on an outer circumferential surface 24b of the first yoke portion 24 of the yoke 21. The plurality of claw magnetic poles 22 protrude radially outward from the outer circumferential surface 24b of the first yoke portion 24 of the yoke 21 toward the rotor 10. The plurality of claw magnetic poles 42 are arranged on an outer circumferential surface 44b of the first yoke portion 44 of the yoke 41 at equal intervals in the circumferential direction. The plurality of claw magnetic poles 42 protrude radially outward from the outer circumferential surface 44b of the first yoke portion 44 of the yoke 41 toward the rotor 10. Each of the claw magnetic poles 22 includes a claw magnetic pole portion 27, and each of the claw magnetic poles 42 includes a claw magnetic pole portion 47.

The claw magnetic pole portion 27 has a predetermined width, and protrudes from the outer circumferential surface 24b of the first yoke portion 24 of the yoke 21 by a predetermined length. The claw magnetic pole portion 47 has a predetermined width, and protrudes from the outer circumferential surface 44b of the first yoke portion 44 of the yoke 41 by a predetermined length.

Each of the claw magnetic poles 22 further includes a claw magnetic pole portion 28, and each of the claw magnetic poles 42 further includes a claw magnetic pole portion 48. This configuration allows the area where magnetic pole surfaces of the claw magnetic poles 22 and 42, magnetized by the armature current of the winding 19, and the rotor 10 face each other, to be made relatively large. Therefore, the torque of the motor 1 can be relatively increased, and the output of the motor 1 can be improved.

The claw magnetic pole portion 28 of the core 20 protrudes by a predetermined length from the tip of the claw magnetic pole portion 27 toward the other core 40 of the pair of the cores 20 and 40. For example, the claw magnetic pole portion 28 has a constant width, regardless of the distance from the claw magnetic pole portion 27. The claw magnetic pole portion 48 of the core 40 protrudes by a predetermined length from the tip of the claw magnetic pole portion 47 toward the other core 20 of the pair of the cores 20 and 40. For example, the claw magnetic pole portion 48 has a constant width, regardless of the distance from the claw magnetic pole portion 47. Note that the claw magnetic pole portion 28 may have a tapered shape in which the width thereof decreases as the distance from the claw magnetic pole portion 27 increases in the axial direction, and the claw magnetic pole portion 48 may have a tapered shape in which the width thereof decreases as the distance from the claw magnetic pole portion 47 increases in the axial direction.

The claw magnetic pole portions 28 and 48 may be omitted.

The center hole 23 is a through-hole surrounded by the inner peripheral surfaces of the plurality of internal teeth 26 of the second yoke portion 25. The center hole 43 is a through-hole surrounded by the inner peripheral surfaces of the plurality of internal teeth 46 of the second yoke portion 45. The center holes 23 and 43 form the through-hole 8 (see Fig. 3) by combining the cores 20 and 40.

The winding 19 is a conductive wire that is wound in an annular shape when viewed in the axial direction. The winding is also referred to as a coil. Both ends of the winding 19 are electrically connected to external terminals of the motor 1. The external terminals of the motor 1 are electrically connected to a drive device (for example, an inverter or the like) that drives the motor 1 with electric power supplied from a power source.

The winding 19 is disposed between the cores 20 and 40 in the axial direction. The winding 19 is wound such that an outer circumferential portion 19a of the winding 19 is located radially inward relative to the outer circumferential surfaces 24b and 44b of the first yoke portions 24 and 44, and an inner circumferential portion 19b is located radially outward relative to the inner circumferential surfaces 24a and 44a of the first yoke portions 24 and 44.

The winding 19 contacts at least one of the cores 20 and 40, thereby improving the heat dissipation performance of the winding 19. For example, the winding 19 is interposed between the first yoke portion 24 and the first yoke portion 44 while contacting one or both of the first yoke portion 24 and the first yoke portion 44 in the axial direction. The winding 19 may contact one or both of the second yoke portion 25 and the second yoke portion 45. The winding 19 may contact at least one of the cores 20 and 40 via a bobbin (not illustrated).

The winding 19 may be insulated by a known method using a core mold, a bobbin, or the like. Examples of an insulating method include winding an insulating tape around an air core coil and using a mold. As the material of the winding 19, a round wire, a square wire, or a litz wire can be used. Preferably, a square wire or a round wire wound in an aligned state may be used.

As illustrated in Fig. 3, the cores 20 and 40 are combined such that the claw magnetic poles 22 of the one core 20 and the claw magnetic poles 42 of the other core 40 are alternately arranged in the circumferential direction. Specifically, the plurality of claw magnetic poles 22 of the one core 20 are alternately arranged with the claw magnetic poles 42 of the other core 40 in the circumferential direction of the stator core 9 (in the circumferential direction of the stator 13). Note that the core 20 may include one claw magnetic pole 22, and the core 40 may include one claw magnetic pole 42. In this case, alternately arranging the one claw magnetic pole 22 and the one claw magnetic pole 42 in the circumferential direction means that the one claw magnetic pole 22 is located on one side in the circumferential direction, and the claw magnetic pole 42 is located on the other side in the circumferential direction.

When an armature current flows through the annular winding 19, the claw magnetic poles 22 of the one core 20 of the pair of cores 20 and 40, and the claw magnetic poles 42 of the other core 40 are magnetized to have different magnetic poles. With this configuration, the claw magnetic poles 22, protruding from the one core 20 of the pair of cores 20 and 40, are adjacent to the claw magnetic poles 42 protruding from the other core 40 in the circumferential direction, and the claw magnetic poles 22 have a different magnetic pole from the claw magnetic poles 42. Therefore, in the circumferential direction of the stator core 9 (the pair of cores 20 and 40), a combination of the N-pole claw magnetic poles 22 and the S-pole claw magnetic poles 42 and a combination of the N-pole claw magnetic poles 42 and the S-pole claw magnetic poles 22 are alternately generated by the armature current flows through the winding 19.

In a state in which the cores 20 and 40 are combined with the winding 19 being interposed therebetween, the plurality of internal teeth 26 may protrude beyond the core 40 in the axial direction, but are not necessarily required to protrude beyond the core 40 in the axial direction, and the plurality of internal teeth 46 may protrude beyond the core 20 in the axial direction, but are not necessarily required to protrude beyond the core 20 in the axial direction. A spacer may be inserted between the cores 20 and 40 so as to adjust the length of the stator core 9 in the axial direction.

A yoke of one core of the pair of cores 20 and 40 has at least one yoke surface that is substantially parallel to the axial direction, and the yoke surface of the one core is in contact with or in proximity to the other core. In this example, the yoke 21 of the core 20 has yoke surfaces 29 that are in contact with or in proximity to yoke surfaces 49 of the yoke 41 of the core 40, and also has yoke surfaces 30 that are in contact with or in proximity to yoke surfaces 50 of the yoke 41 of the core 40.

The yoke surfaces 29 are surfaces provided on the respective internal teeth 26 (26a, 26b, 26c, and 26d) of the second yoke portion 25 and facing one circumferential direction (the clockwise direction in Fig. 3 and Fig. 4). The yoke surfaces 30 are surfaces provided on the respective internal teeth 26 (26a, 26b, 26c, and 26d) of the second yoke portion 25 and facing the opposite circumferential direction (the counterclockwise direction in Fig. 3 and Fig. 4). The yoke surfaces 50 are surfaces provided on the respective internal teeth 46 (46a, 46b, 46c, and 46d) of the second yoke portion 45 and facing one circumferential direction (the clockwise direction in Fig. 3 and Fig. 4). The yoke surfaces 49 are surfaces provided on the respective internal teeth 46 (46a, 46b, 46c, and 46d) of the second yoke portion 45 and facing the opposite circumferential direction (the counterclockwise direction in Fig. 3 and Fig. 4).

Each of the internal teeth 26 is in contact with or in proximity to two internal teeth, of the plurality of internal teeth 46, adjacent to both sides of a corresponding internal tooth 26 in the circumferential direction. In other words, each of the internal teeth 46 is in contact with or in proximity to two internal teeth, of the plurality of internal teeth 26, adjacent to both sides of a corresponding internal tooth 46 in the circumferential direction. Specifically, in the yoke 21, in the case of the internal tooth 26a whose one side in the circumferential direction is adjacent to the internal tooth 46a and the other side in the circumferential direction is adjacent to the internal tooth 46d, a yoke surface 29 of the internal tooth 26a is in contact with or in proximity to a yoke surface 49 of the internal tooth 46a, and a yoke surface 30 of the internal tooth 26a is in contact with or in proximity to a yoke surface 50 of the internal tooth 46d. The same applies to the other internal teeth. In this manner, each of the yoke surfaces 29 is in contact with or in proximity to a corresponding yoke surface 49 of the plurality of yoke surfaces 49, and each of the yoke surfaces 30 is in contact with or in proximity to a corresponding yoke surface 50 of the plurality of yoke surfaces 50.

Further, in this example, the yoke 21 of the core 20 has outer peripheral surfaces 31 that are in contact with or in proximity to the inner circumferential surface 44a of the yoke 41 of the core 40. The yoke 41 of the core 40 has outer peripheral surfaces 51 that are in contact with or in proximity to the inner circumferential surface 24a of the yoke 21 of the core 20. Each of the inner circumferential surfaces 24a and 44a and the outer peripheral surfaces 31 and 51 is a yoke surface that is substantially parallel to the axial direction.

The outer peripheral surfaces 31 are curved surfaces that are provided on the respective internal teeth 26 (26a, 26b, 26c, and 26d) of the second yoke portion 25 and face radially outward. The outer peripheral surfaces 51 are curved surfaces that are provided on the respective internal teeth 46 (46a, 46b, 46c, and 46d) of the second yoke portion 45 and face radially outward.

As described, a yoke of one core of the cores 20 and 40 has at least one yoke surface that is substantially parallel to the axial direction, and the yoke surface of the one core is in contact with or in proximity to the other core. With this configuration, when the cores 20 and 40 are formed by press-forming magnetic powder cores in the axial direction, because the yoke surface is substantially parallel to the pressing direction, the dimensional accuracy of the yoke surface does not readily decrease. Therefore, a decrease in the dimensional accuracy of the stator core 9 in the axial direction can be reduced.

When a plurality of stator units are stacked in the axial direction of a rotor, a magnetic flux linked with each of windings of the stator units would be unbalanced and the torque of the motor would decrease.

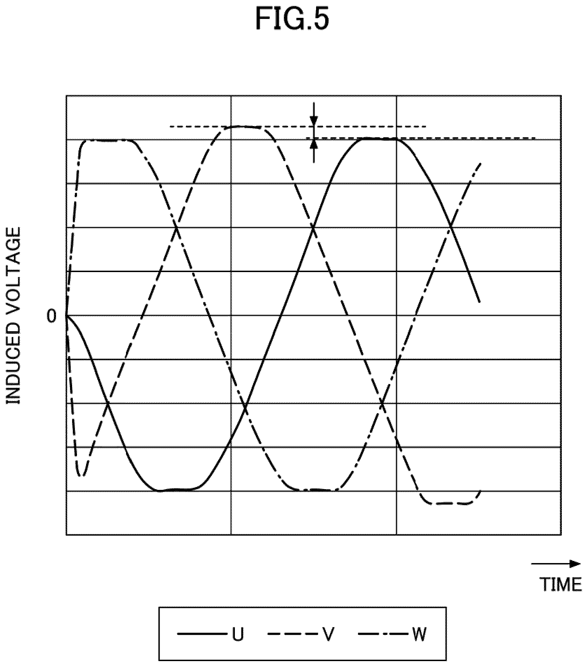

Fig. 5 is a diagram illustrating an example of a state in which a magnetic flux linked with each of windings of a plurality of stator units stacked in the axial direction of a rotor is unbalanced. Fig. 5 illustrates the waveforms of the voltages induced in the windings of the U-phase, V-phase, and W-phase stator units when the rotor rotates about the rotor axis at a constant speed. In Fig. 5, it is indicated that the induced voltages in the windings of the U-phase and W-phase stator units are smaller than the induced voltage in the winding of the V-phase stator unit. The induced voltage in a winding is proportional to a magnetic flux linked with the winding. That is, in Fig. 5, it is indicated that the amount of magnetic flux linked with each of the U-phase and W-phase windings located on both sides in the axial direction is smaller than that linked with the V-phase winding located inward in the axial direction. If the amount of magnetic flux linked with each of the U-phase and W-phase windings is small, the torque generated by the U-phase and W-phase stator units would decrease, and as a result, the torque of the entire motor would decrease.

Conversely, in the first embodiment according to the present disclosure, as illustrated in Fig. 1, the rotor 10 includes at least one permanent magnet 12 that radially faces at least a portion of any of claw magnetic poles of the stator 13. Because the plurality of claw magnetic poles are arranged in the circumferential direction, a claw magnetic pole, which the one permanent magnet 12 radially faces, varies (changes) depending on the rotation position of the rotor 10. At least one of magnet end portions in the axial direction of the permanent magnet 12 (a magnet end portion on one side or magnet end portions on both sides in the axial direction of the permanent magnet 12) protrudes further in the axial direction than all of the claw magnetic poles of the stator 13, as illustrated in Fig. 1. The magnet end portions protruding further in the axial direction than all of the claw magnetic poles of the stator 13 allow a magnetic flux linked with each of windings 19 of the U-phase stator unit 14 and the W-phase stator unit 16, which are located on both sides in the axial direction, to increase by the amount by which the magnet end portions protrude. Therefore, a decrease in the torque of the motor 1 can be suppressed. Depending on the length by which the magnet end portions protrude, it is also possible to increase the torque of the motor 1.

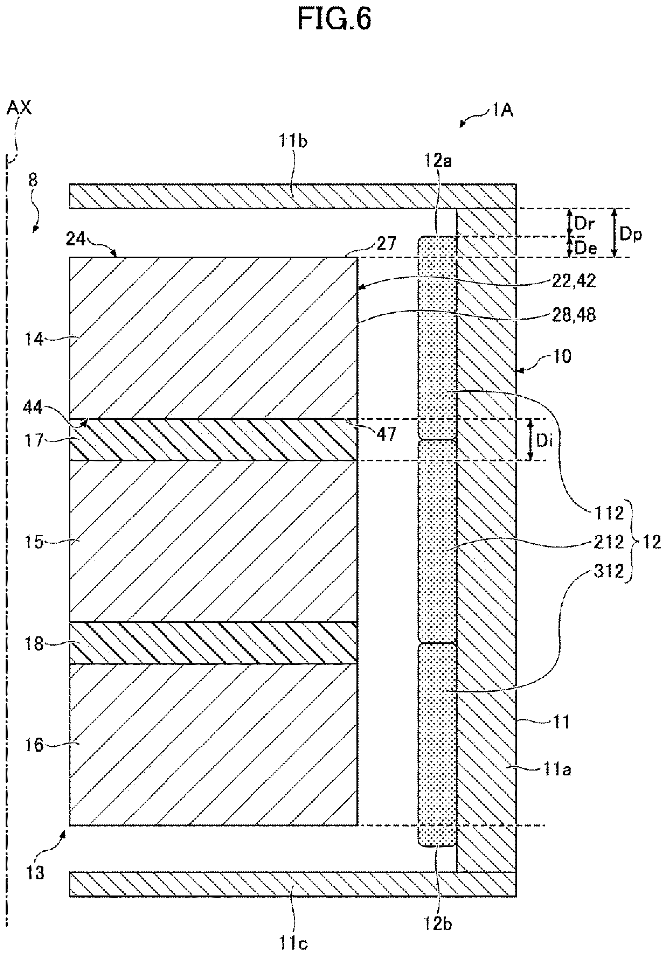

Next, multiple example configurations of motors 1 (motors 1A through 1G) will be described with reference to Fig. 6 through Fig. 12. Fig. 6 through Fig. 12 are drawings schematically illustrating cross sections parallel to the axial direction that passes through the axis AX. In each of Fig. 6 through Fig. 12, a configuration on one side in the radial direction with respect to the axis AX is depicted. The rotor core 11 illustrated in Fig. 6 through Fig. 12 includes a side wall 11a having a substantially cylindrical shape, an end plate 11b located on one side in the axial direction, and an end plate 11c located on the other side in the axial direction. The end plate 11b is an end face connected to one end in the axial direction of the side wall 11a, and the end plate 11c is an end face connected to the other end in the axial direction of the side wall 11a. One or both of the end plates 11b and 11c may be omitted.

Claw magnetic poles 22 and 42 of adjacent stator units of different phases are arranged in the axial direction. Claw magnetic poles 22 and 42 of the U-phase stator unit 14 and claw magnetic poles 22 and 42 of the V-phase stator unit 15 are adjacent to each other in the axial direction. The claw magnetic poles 22 and 42 of the V-phase stator unit 15 and claw magnetic poles 22 and 42 of the W-phase stator unit 16 are adjacent to each other in the axial direction.

De represents the length by which a magnet end portion 12a on one side (or a magnet end portion 12b on the other side) in the axial direction of a permanent magnet 12 protrudes further in the axial direction than all of the claw magnetic poles 22 and 42 of the stator 13. Dr represents the distance between the magnet end portion 12a and the end plate 11b (or the distance between the magnet end portion 12b and the end plate 11c). Dp represents the sum of De and Dr. Di represents the length of a gap between adjacent stator units in the axial direction (or the thickness of each of the non-magnetic material layers 17 and 18 in the axial direction). By adjusting the magnitudes of De, Dr and Di, the amount of magnetic flux generated at each of the magnet end portions 12a and 12b and linked with each of the windings of the respective phases can be increased or decreased.

Fig. 6 is a cross-sectional view partially illustrating a first example configuration of the rotary electrical device according to the first embodiment. In a motor 1A illustrated in Fig. 6, magnet end portions 12a and 12b on both sides in the axial direction of a permanent magnet 12 protrude further in the axial direction than all of the claw magnetic poles 22 and 42 of the stator 13. Since the magnet end portions 12a and 12b on both sides in the axial direction of the permanent magnet 12 protrude further in the axial direction than all of the claw magnetic poles 22 and 42, a magnetic flux linked with each of the windings 19 of the U-phase stator unit 14 and the W-phase stator unit 16, located on both sides in the axial direction, increases by the amount by which the magnet end portions 12a and 12b project. As a result, a decrease in the torque of the motor 1A can be suppressed.

From among the plurality of U-phase, V-phase, and W-phase stator units, the U-phase stator unit 14 is an example of an outer stator unit located outward in the axial direction, and the V-phase stator unit 15 is an example of an inner stator unit located inward in the axial direction. The magnet end portion 12a protrudes further in the axial direction than the claw magnetic poles 22 and 42 of the U-phase stator unit 14 so as to reduce the difference in flux linkage between the winding 19 of the U-phase stator unit 14 and the winding 19 of the V-phase stator unit 15. Accordingly, the difference between torque generated by the U-phase stator unit 14 and torque generated by the V-phase stator unit 15 can be decreased, and thus, an imbalance of torque between the stator units 14 and 15 can be reduced.

Similarly, from among the plurality of U-phase, V-phase, and W-phase stator units, the W-phase stator unit 16 is an example of the outer stator unit located outward in the axial direction, and the V-phase stator unit 15 is an example of the inner stator unit located inward in the axial direction. The magnet end portion 12b protrudes further in the axial direction than the claw magnetic poles 22 and 42 of the W-phase stator unit 16 so as to reduce the difference in flux linkage between the winding 19 of the W-phase stator unit 16 and the winding 19 of the V-phase stator unit 15. Accordingly, the difference between torque generated by the W-phase stator unit 16 and torque generated the V-phase stator unit 15 can be decreased, and thus, an imbalance of torque between the stator units 15 and 16 can be reduced.

The magnet end portion 12a may protrude further in the axial direction than the claw magnetic poles 22 and 42 of the U-phase stator unit 14 and the magnet end portion 12b may protrude further in the axial direction than the claw magnetic poles 22 and 42 of the W-phase stator unit 16 so as to reduce the difference in flux linkage between the windings 19 of the plurality of U-phase, V-phase, and W-phase stator units 14, 15, and 16. Accordingly, the difference in torque generated by each of the U-phase, V-phase, and W-phase stator units 14, 15, and 16 can be decreased, and thus, an imbalance of torque between the stator units 14, 15, and 16 can be reduced.

Adjacent stator units of the plurality of U-phase, V-phase, and W-phase stator units 14, 15, and 16 are arranged with a gap therebetween, and a portion of the permanent magnet 12 radially faces the gap. Accordingly, a magnetic flux linked with each of the windings 19 of the stator units adjacent to each other in the axial direction increases by the amount by which a magnetic flux is generated at the portion of the permanent magnet 12 that radially faces the gap. As a result, a decrease in the torque of the motor 1A can be suppressed.

In the example illustrated in Fig. 6, the permanent magnet 12, of a plurality of permanent magnets 12, includes a plurality of (in this example, three) magnet members 112, 212, and 312 arranged in the axial direction. A lower end portion of the magnet member 112 and an upper end portion of the magnet member 212 radially face a gap between the adjacent stator units 14 and 15. Accordingly, a magnetic flux linked with each of the windings 19 of the stator units 14 and 15 increases by the amount by which a magnetic flux is generated at the portions of the permanent magnet 12 that radially face the gap. Similarly, a lower end portion of the magnet member 212 and an upper end portion of the magnet member 312 radially face a gap between the adjacent stator units 15 and 16. Accordingly, a magnetic flux linked with each of the windings 19 of the stator units 15 and 16 increases by the amount by which a magnetic flux is generated at the portions of the permanent magnet 12 that radially faces the gap. As a result, a decrease in the torque of the motor 1A can be suppressed.

The motor 1A includes the non-magnetic material layer 17 in the gap between the stator units 14 and 15, and includes the non-magnetic material layer 18 in the gap between the stator units 15 and 16. In the motor 1A, because magnetic flux leakage between adjacent stator units can be further reduced, a decrease in the torque of the motor 1A can be further suppressed.

In the example illustrated in Fig. 6, a portion between the magnet members 112 and 212 that are adjacent to each other in the axial direction (in this example, an interface or a small space between the lower end portion of the magnet member 112 and the upper end portion of the magnet member 212) radially faces the gap between the stator units 14 and 15 that are adjacent to each other in the axial direction. Accordingly, a magnetic flux linked with each of the windings 19 of the stator units 14 and 15 increases by the amount by which a magnetic flux is generated at the portion of the permanent magnet 12 that radially faces the gap. As a result, a decrease in the torque of the motor 1A can be suppressed. Similarly, a portion between the magnet members 212 and 312 that are adjacent to each other in the axial direction (in this example, an interface or a small space between the lower end portion of the magnet member 212 and the upper end portion of the magnet member 312) radially faces the gap between the stator units 15 and 16 that are adjacent to each other in the axial direction. Accordingly, a magnetic flux linked with each of the windings 19 of the stator units 15 and 16 increases by the amount by which a magnetic flux is generated at the portion of the permanent magnet 12 that radially faces the gap. As a result, a decrease in the torque of the motor 1A can be suppressed.

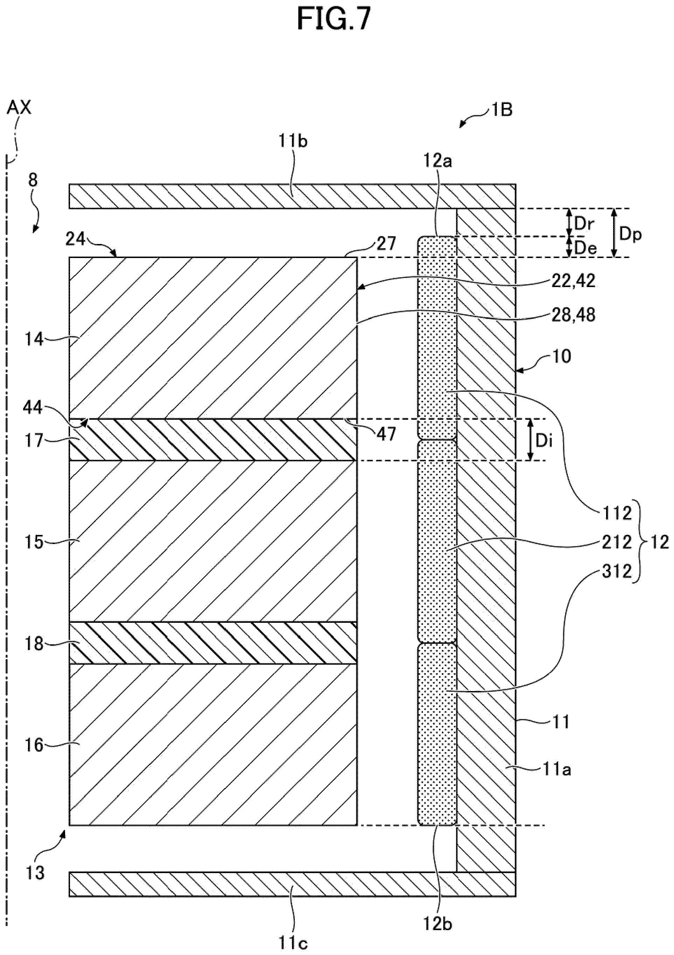

Fig. 7 is a cross-sectional view partially illustrating a second example configuration of the rotary electrical device according to the first embodiment. The description of the second example configuration that is the same as that of the above example configuration will be omitted or simplified by referring to the description of the above example configuration.

In a motor 1B illustrated in Fig. 7, a magnet end portion 12a on one side in the axial direction of a permanent magnet 12 protrudes further in the axial direction than all of the claw magnetic poles 22 and 42 of the stator 13. Since the magnet end portion 12a on one side in the axial direction of the permanent magnet 12 protrudes further in the axial direction than all of the claw magnetic poles 22 and 42 of the stator 13, a magnetic flux linked with the winding 19 of the U-phase stator unit 14 increases by the amount by which the magnet end portion 12a projects. As a result, a decrease in the torque of the motor 1B can be suppressed.

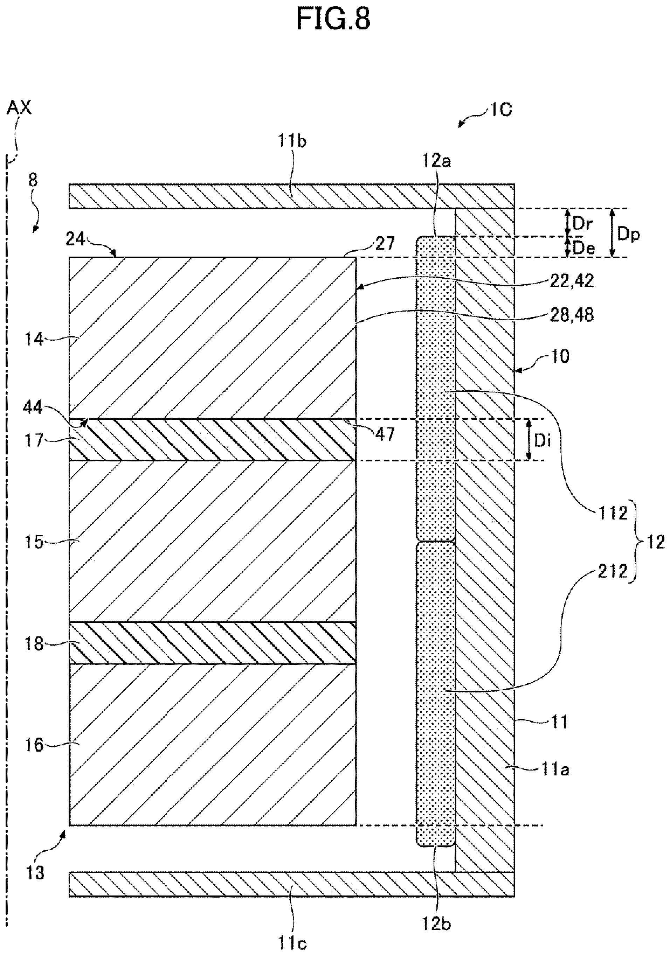

Fig. 8 is a cross-sectional view partially illustrating a third example configuration of the rotary electrical device according to the first embodiment. The description of the third example configuration that is the same as those of the above example configurations will be omitted or simplified by referring to the description of the above example configurations.

In a motor 1C illustrated in Fig. 8, each of a plurality of permanent magnets 12 includes a plurality of (in this example, two) magnet members 112 and 212 that are arranged in the axial direction. An intermediate portion between an upper end portion and a lower end portion of the magnet member 112 of a permanent magnet 12 radially faces the gap between the adjacent stator units 14 and 15. Accordingly, a magnetic flux linked with each of the windings 19 of the stator units 14 and 15 increases by the amount by which a magnetic flux is generated at the portion of the permanent magnet 12 that radially faces the gap. As a result, a decrease in the torque of the motor 1C can be suppressed. Similarly, an intermediate portion between an upper end portion and a lower end portion of the magnet member 212 radially faces the gap between the adjacent stator units 15 and 16. Accordingly, a magnetic flux linked with each of the windings 19 of the stator units 15 and 16 increases by the amount by which a magnetic flux is generated at the portion of the permanent magnet 12 that radially faces the gap. As a result, a decrease in the torque of the motor 1C can be suppressed.

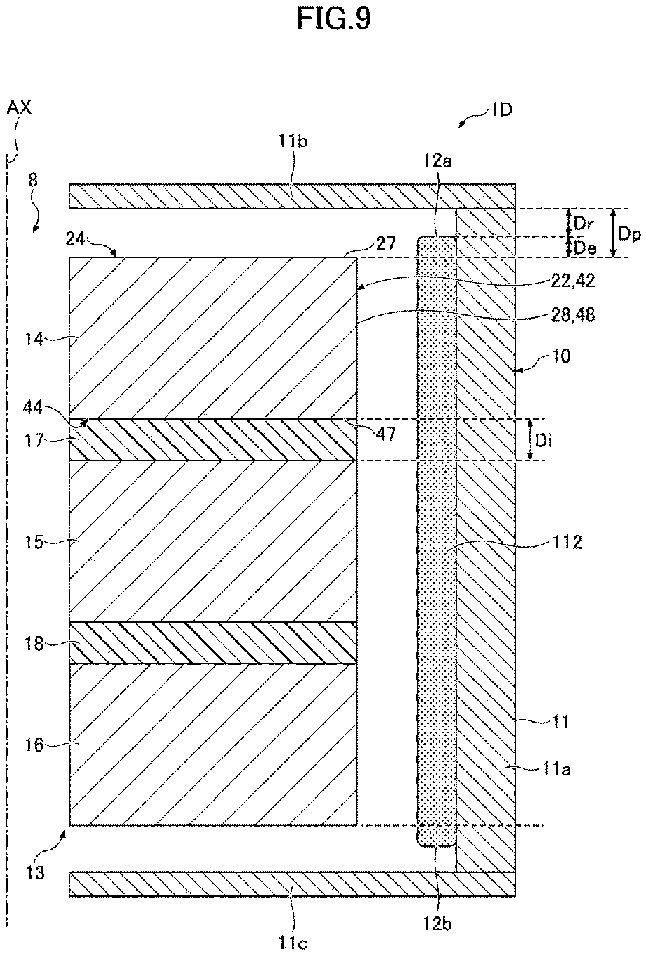

Fig. 9 is a cross-sectional view partially illustrating a fourth example configuration of the rotary electrical device according to the first embodiment. The description of the fourth example configuration that is the same as those of the above example configurations will be omitted or simplified by referring to the description of the above example configurations.

In a motor 1D illustrated in Fig. 9, each of a plurality of permanent magnets 12 includes one magnet member 112. Intermediate portions between an upper end portion and a lower end portion of the magnet member 112 radially face the gap between the adjacent stator units 14 and 15 and the gap between the adjacent stator units 15 and 16. Accordingly, a magnetic flux linked with each of the windings 19 of the stator units 14, 15, and 16 increases by the amount by which a magnetic flux is generated at the portions of the permanent magnet 12 that radially face the gaps. As a result, a decrease in the torque of the motor 1D can be suppressed.

Further, because each of the permanent magnets 12 includes the one magnet member 112, ease of assembly of the permanent magnets 12 into the rotor core 11 can be facilitated.

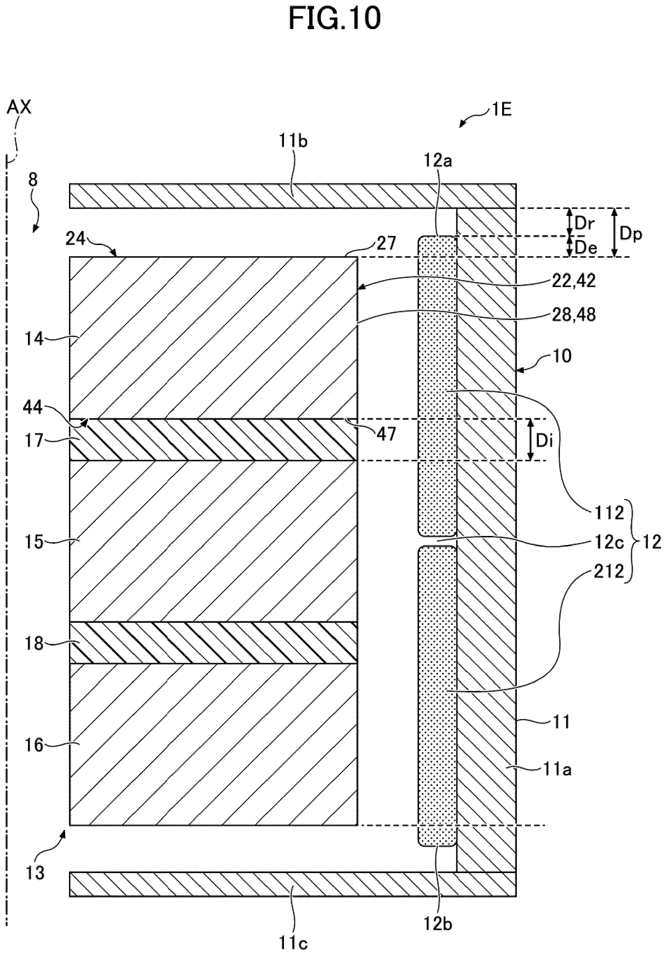

Fig. 10 is a cross-sectional view partially illustrating a fifth example configuration of the rotary electrical device according to the first embodiment. The description of the fifth example configuration that is the same as those of the above example configurations will be omitted or simplified by referring to the description of the above example configurations.

In a motor 1E illustrated in Fig. 10, each of permanent magnets 12 includes a plurality of (in this example, two) magnet members 112 and 212 that are arranged in the axial direction. A space 12c is provided between the magnet members 112 and 212 that are arranged in the axial direction. The length by which each of magnet end portions 12a and 12b protrudes further in the axial direction than the claw magnetic poles 22 and 42 can be adjusted by adjusting the length of the space 12c in the axial direction. Accordingly, an increase or a decrease in the torque of the motor 1E can be finely adjusted.

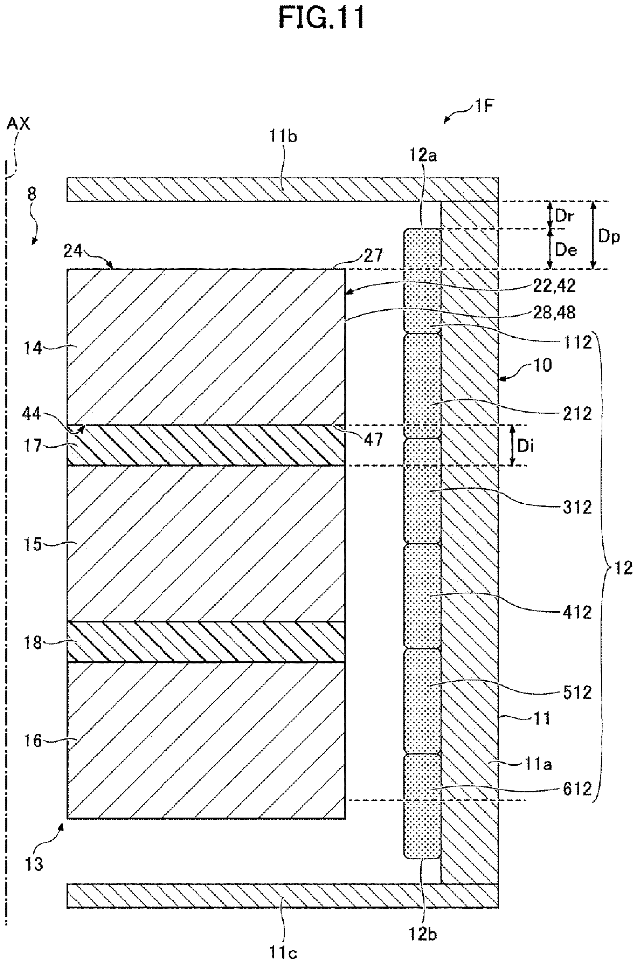

Fig. 11 is a cross-sectional view partially illustrating a sixth example configuration of the rotary electrical device according to the first embodiment. The description of the sixth example configuration that is the same as those of the above example configurations will be omitted or simplified by referring to the description of the above example configurations.

In a motor 1F illustrated in Fig. 11, each of permanent magnets 12 includes a plurality of (in this example, six) magnet members 112, 212, 312, 412, 512, and 612 that are arranged in the axial direction. Increasing the number of magnet members arranged in the axial direction can provide a greater degree of freedom in adjusting the length by which magnet end portions 12a and 12b protrudes further in the axial direction than the claw magnetic poles 22 and 42. Accordingly, an increase or a decrease in the torque of the motor 1F can be finely adjusted.

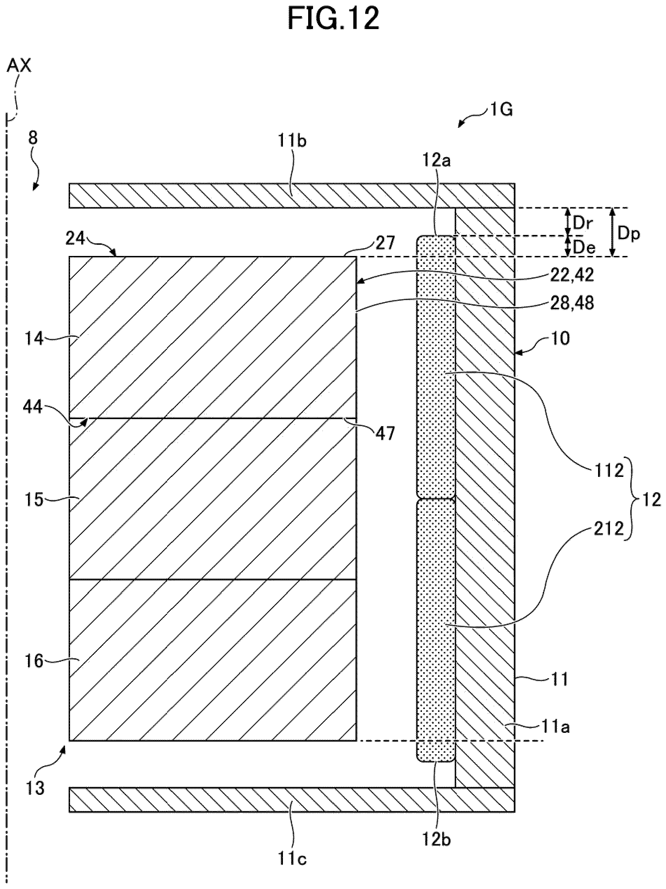

Fig. 12 is a cross-sectional view partially illustrating a seventh example configuration of the rotary electrical device according to the first embodiment. The description of the seventh example configuration that is the same as those of the above example configurations will be omitted or simplified by referring to the description of the above example configurations.

As in a motor 1G illustrated in Fig. 12, a gap is not required between adjacent stator units, and the non-magnetic material layers 17 and 18 are not required to be provided. With this configuration, the component configuration is simplified, and thus, ease of assembly of the motor 1G can be facilitated.

Although embodiments have been described above, it will be understood that various modifications may be made to the configurations and details thereof without departing from the spirit and scope of the claims. Variations and improvements such as combinations and replacements with part or all of other embodiments are possible.

For example, if a yoke portion has surfaces that face each other in the axial direction, the surfaces that face each other in the axial direction do not preferably contact each other. Further, the distance between the surfaces that face each other in the axial direction is preferably set to be greater than the distance between yoke surfaces that are substantially parallel to the axial direction. With this configuration, even if a large dimensional error occurs in the axial direction, the error can be absorbed.

For example, in the above-described embodiments, the motor 1 is an outer-rotor-type claw pole motor in which the rotor 10 is disposed radially outward relative to the stator 13. However, the rotary electrical device according to the present disclosure can be applied to an inner-rotor-type claw pole motor in which a rotor is disposed radially inward relative to a stator. An inner-rotor-type rotary electrical device includes a rotor having a substantially solid cylindrical shape and configured to be rotatable, and a stator having a substantially annular shape and disposed radially outward relative to the rotor to surround the rotation axis of the rotor.

This international application is based on and claims priority to Japanese Patent Application No. 2020-089014, filed on May 21, 2020, the entire contents of which are incorporated herein by reference.

### DESCRIPTION OF THE REFERENCE NUMERALS

1, 1A to 1G motor
8 through-hole
9 stator core
10 rotor
11 rotor core
11a side wall
11b, 11c end plate
12 permanent magnet
12a, 12b magnet end portion
12c space
13 stator
14 to 16 stator unit
17, 18 non-magnetic material layer
19 winding
19a outer circumferential portion
19b inner circumferential portion
20, 40 core
21, 41 yoke
22, 42 claw magnetic pole
23, 43 center hole
24, 44 first yoke portion
24a, 44a inner circumferential surface
24b, 44b outer circumferential surface
25, 45 second yoke portion
26a, 26b, 26c, 26d, 46a, 46b, 46c, 46d internal tooth
27, 28, 47, 48 claw magnetic pole portion
29, 30, 49, 50 yoke surface
31, 51 outer peripheral surface
112, 212, 312, 412, 512, 612 magnet member
AX rotation axis

## Claims

1. A rotary electrical device comprising:
a rotor having a substantially hollow cylindrical shape or a substantially solid cylindrical shape and configured to be rotatable; and
a stator having a substantially annular shape and disposed in a radial direction of the rotor to surround a rotation axis of the rotor,
wherein the stator includes a plurality of stator units that are stacked in an axial direction of the rotor,
wherein each of the stator units includes
a winding that is wound in a substantially annular shape around the rotation axis,
a stator core that surrounds the winding, and
one or more claw magnetic poles that protrude radially toward the rotor from each of two end portions in an axial direction of the stator core,
wherein one or more claw magnetic poles that protrude from one end portion of the two end portions of the stator core and one or more claw magnetic poles that protrude from an opposite end portion of the two end portions of the stator core are alternately arranged in a circumferential direction of the stator,
wherein the rotor includes a magnet that radially faces at least a portion of any of claw magnetic poles of the stator at a predetermined rotation position, and
wherein at least one of magnet end portions in an axial direction of the magnet protrudes further in the axial direction than all of the claw magnetic poles of the stator.

2. The rotary electrical device according to claim 1, wherein the magnet end portions on both sides in the axial direction of the magnet protrude further in the axial direction than all of the claw magnetic poles of the stator.

3. The rotary electrical device according to claim 1 or 2, wherein one of the magnet end portions protrudes further in the axial direction than claw magnetic poles of an outer stator unit of the plurality of stator units so as to reduce a difference in flux linkage between a winding of the outer stator unit and a winding of an inner stator unit of the plurality of stator units, the outer stator unit being located outward in the axial direction and the inner stator unit being located inward in the axial direction.

4. The rotary electrical device according to any one of claims 1 to 3, wherein adjacent stator units of the plurality of stator units are arranged with a gap therebetween, and a portion of the magnet radially faces the gap.

5. The rotary electrical device according to claim 4, further comprising a member that is made of a non-magnetic material in the gap.

6. The rotary electrical device according to any one of claims 1 to 5, wherein the magnet includes one magnet member.

7. The rotary electrical device according to any one of claims 1 to 5, wherein the magnet includes a plurality of magnet members that are arranged in the axial direction, and
a portion between adjacent magnet members of the plurality of magnet members radially faces a gap between adjacent stator units of the plurality of stator units.
